# EUROPÄISCHE PATENTSCHRIFT

(11) **EP 2 669 879 B1**
(45) Veröffentlichungstag und Bekanntmachung des Hinweises auf die Patenterteilung: **16.01.2019**
(21) Anmeldenummer: 13002191.8
(22) Anmeldetag: 25.04.2013
(51) Int. Cl.: G09F 3/00, F16B 1/00, F16B 25/00

(54) **Sicherheitssystem für die Errichtung eines ein Holzbauteil aufweisenden Bauwerkes und unter Verwendung eines solchen Sicherheitssystems hergestelltes Bauwerk**
Safety system for construction of a structure with a wooden component and structure produced using such a safety system
Système de sécurité pour la réalisation d'une construction présentant un composant en bois et construction fabriquée en utilisant un tel système de sécurité

(30) Priorität: 03.05.2012 DE 202012004426 U
(43) Veröffentlichungstag der Anmeldung: 04.12.2013
(73) Patentinhaber: Rößner, Jens, 9016 St. Gallen (CH)
(72) Erfinder: Rößner, Jens, 9016 St. Gallen (CH)
(74) Vertreter: Leinweber & Zimmermann

(56) Entgegenhaltungen:
- US-A1- 2004 115 022

## Beschreibung

Die Erfindung betrifft ein Sicherheitssystem für die Errichtung eines Bauwerkes unter Verwendung wenigstens eines unter Einsatz von Verbindungselementen anzubringenden Holzbauteils, dazu geeignete Verbindungselemente sowie ein unter Verwendung eines solchen Sicherheitssystems errichtetes Bauwerk.

Gegenwärtig erfolgt die Errichtung eines solchen Bauwerkes in mehreren aufeinanderfolgenden Phasen. Dabei wird in einer vor Ausführung der Errichtung selbst durchgeführten Planungsphase ermittelt, welchen Kräften und Belastungen die für die Verbindung der eingesetzten Holzbauteile miteinander oder mit anderen Bauteilen wie z. B. Stahlbauteilen herangezogene Verbindungselemente ausgesetzt sind. In der Planungsphase werden aus den zu erwartenden Belastungen anhand bestehender Sicherheitsnormen Mindestanforderungen für die Verbindungselemente erkannt, beispielsweise eine erforderliche Zugtragfähigkeit im Falle selbstbohrender Holzbauschrauben als Verbindungselemente. In Kenntnis dieser Mindestanforderungen wird in der Planungsphase ein auf dem Markt verfügbares und diese Anforderungen erfüllende Verbindungselement ausfindig gemacht und ausgewählt, zumeist basierend auf dem Erfahrungsschatz und ggf. den persönlichen Vorlieben des Planers.

Zwischen Planungen und Ausführung der Errichtung wird dann das Bauwerk üblicherweise ausgeschrieben. In der Ausschreibung wird in der Regel für die Anforderungen an die Verbindungselemente der Produktname des zuvor ausgewählten Produktes vorgeschlagen, üblicherweise mit dem Zusatz "oder gleichwertig".

In der Phase der Errichtung des Bauwerkes werden von dem ausführenden Verarbeiter die vorgeschlagenen Verbindungselemente oder nach seinem Ermessen gleichwertige Verbindungselemente eingesetzt, die Holzbauteile damit angebracht und auf diese Weise das Bauwerk errichtet.

Es ist jedoch immer wieder festzustellen, dass trotz korrekter Planung in der Planungsphase eine zufriedenstellende Errichtung des Bauwerkes nicht gelingt, dies aber bei der Abnahme des Bauwerkes nicht bemerkt wird. Insbesondere hat es sich herausgestellt, dass die von den verbauten Verbindungselementen zu bewirkende Verbindung den Belastungen nicht gewachsen ist. Dies kann auch lange nach Errichtung des Bauwerks zu Schäden führen, welche Nachbesserungsarbeiten erforderlich machen und im schlimmsten Falle auch Unglücke mit Personenschäden nach sich ziehen.

US 2004/115022 A1 offenbart ein Sicherheitssystem gemäß dem Oberbegriff von Anspruch 1.

Der Erfindung liegt die Aufgabe zugrunde, die Sicherheit errichteter Bauwerke zu verbessern.

Diese Aufgabe wird durch ein Sicherheitssystem nach Anspruch 1 gelöst.

Nachstehend findet sich für die dem Sicherheitssystem zugrundeliegenden Holzbauschrauben gelegentlich der Ausdruck "Verbindungselement", darunter ist jedoch stets die Holzbauschraube zu verstehen.

Die Erfindung sieht also vor ein Sicherheitssystem für die Errichtung eines Bauwerkes unter Verwendung wenigstens eines unter Einsatz von Verbindungselementen anzubringenden Holzbauteils, wobei für Eigenschaften der Verbindungselemente betreffend deren mechanische Belastungsfähigkeit und deren Widerstandsfähigkeit gegenüber Umwelteinflüssen, sowie insbesondere für Eigenschaften ihres gemeinsamen Einsatzes sich aus dem Bauwerk ergebende Mindestanforderungen festgelegt sind, und wobei das Sicherheitssystem aufweist: ein mehrere Subcodes aufweisendes Codiersystem, wobei je einer der Subcodes vorbestimmt abgestufte Bereiche für je eine dieser Eigenschaften in einer vorgegebenen Rangordnung abbildet und eine Zusammenstellung aus je einem Element der Bildmenge eines jeden Subcodes ein über das Codiersystem entzifferbares Identifikationsmerkmal für ein jeweiliges Verbindungselement bildet, wobei die Rangordnung derart ist, dass ein im Vergleich mit einem ausreichenden, bei Entzifferung die Erfüllung aller festgelegten Mindestanforderungen anzeigenden Identifikationsmerkmal bezüglich jedes einzelnen seiner zusammengestellten Elemente ranggleiches oder ranghöheres Identifikationsmerkmal ebenfalls die Erfüllung der Mindestanorderungen impliziert, und wobei das Sicherheitssystem weiter aufweist: ein für die Anbringung des Holzbauteils einsetzbares und somit über ein zugehöriges ausreichendes Identifikationsmerkmal identifizierbares Verbindungselement, wobei das zugehörige Identifikationsmerkmal an wenigstens einem Ort ganzheitlich abrufbar ist und insbesondere das rangniedrigste ausreichende Identifikationsmerkmal ist.

Dabei beruht die Erfindung auf der Erkenntnis, dass die oben erwähnte nicht ausreichend leistungsfähige Verbindung darauf zurückzuführen ist, dass bei der Errichtung Verbindungselemente zum Einsatz gekommen sind, welche z. B. die erforderlichen Tragfähigkeitseigenschaften nicht zu leisten im Stande sind. Des weiteren beruht die Erfindung auf der Erkenntnis, dass diese fehlenden Tragfähigkeitseigenschaften darauf zurückzuführen sind, dass es aufgrund einer bei der Lieferung der ausgewählten und angedachten Verbindungselemente entstandener Zeitverzögerung oder einer Fehlberechnung der erforderlichen Menge zum Einsatz kurzfristig als Ersatz ausgewählter und nicht ausreichend leistungsfähiger Verbindungselemente kommt.

Mit dem erfindungsgemäßen Sicherheitssystem wird das Risiko für das Auftreten derartiger Fehler vermindert und nahezu ausgeschlossen. Denn sollte das ursprünglich vorgesehene Verbindungselement mit dem ausreichenden Identifikationsmerkmal, d. h. ausreichend leistungsfähige Verbindungselement nicht wie geplant oder erst unter Zeitverzögerung zur Verfügung stehen, ist es nicht mehr erforderlich, aus dem ursprünglich geplanten Verbindungselement oder dessen Identifikationsinformation Rückschlüsse auf die erforderlichen Eigenschaften ziehen zu müssen. Vielmehr wird durch die vorgesehene Rangordnung der einzelnen Subcodes sichergestellt, dass jedes ersatzweise herangezogene Verbindungselement, dessen nach dem gleichen Codiersystem bestimmte Identifikationsmerkmal im Vergleich mit dem Identifikationsmerkmal des ursprünglich vorgesehenen Verbindungselementes bezüglich jedes einzelnen seiner zusammengestellten Elemente ranggleich oder ranghöher ist, automatisch die erforderlichen Mindestanforderungen erfüllt, ihm also ein ausreichendes Identifikationsmerkmal zugehört. Je nach Ausführung der Bildmenge der Subcodes kann der erforderliche Vergleich einfach durchgeführt werden. Besteht diese Bildmenge beispielsweise für alle Subcodes aus Ziffern, so wäre im Beispielsfall einer Holzbauschraube mit sieben Subcodes lediglich eine siebenstellige Zahl Ziffer für Ziffer auf den mindestens gleich hohen Wert zu prüfen, um zuverlässigen Ersatz zu beschaffen.

Sofern sich die Ausdrücke "ranggleich", "ranghöher" und "rangniedrigstes" sprachlich vereinfachend auf Identifikationsmerkmale als ganzes beziehen, bedeuten sie dennoch die entsprechende Rangeigenschaft kumulativ für jedes einzelne seiner Elemente.

Ein weiterer Nebeneffekt des erfindungsgemäßen Sicherheitssystems ist die durch den einfachen Vergleich ermöglichte Zeiteinsparung für die Beschaffung der adäquaten Ersatz-Verbindungselemente.

Ein weiterer Vorteil des erfindungsgemäßen Sicherheitssystems ist darin zu sehen, dass der Vergleich zwischen den Eigenschaften zweier unterschiedlicher Verbindungselemente auf der Ebene der codierten Eigenschaften erfolgen kann. Dies vereinfacht den Vergleich und erfordert von der den Vergleich durchführenden Person geringere oder gar keine Spezialkenntnisse.

Da das Identifikationsmerkmal an einem Ort ganzheitlich abrufbar ist, kann die erforderliche Abrufzeit gering ausfallen, was zu einer weiteren Zeitersparnis für die Errichtung des Bauwerkes führt.

Neben den in den abhängigen Ansprüchen genannten Orten kann alternativ und/oder zusätzlich vorgesehen werden, dass der Ort ein zugriffsfreier oder ein eine Zugriffsberechtigung erfordernder elektronischer Datenträger, insbesondere eine Datenbank ist, in welcher einer Kennzeichnung des Verbindungselementes das zugehörige Identifikationsmerkmal zugeordnet abgespeichert ist. In diesem Zusammenhang kann auch vorgesehen werden, zwei oder mehr verschiedene Verbindungselemente mit ihrem zugehörigen Identifikationsmerkmal auf dem gleichen elektronischen Datenträger abzuspeichern. Auf diese Weise kann ein Vergleich nochmals einfacher erfolgen, und insbesondere automatisch durch entsprechende Software durchgeführt werden.

Das erfindungsgemäße Sicherheitssystem ist besonders geeignet für Holzbauschrauben. Das Codiersystem weist einen Subcode für jede der Eigenschaften: charakteristisches Fließmoment, charakteristischer Ausziehparameter, charakteristischer Kopfdurchziehparameter, charakteristische Zugtragfähigkeit und charakteristische Torsionsfestigkeit auf. Diese sind beispielsweise in der EN 14592: 2008 und EN ISO 10666:1999 definiert.

Ein weiterer Subcode des Codiersystems bildet bevorzugt den Korrosionsschutz ab. Dieser ist zum einen vom Material, aber auch von der Beschichtung abhängig. Die Definitionen in den Statiknormen EURO-Code 5, DIN 1052:2008 und SIA 265: 2012 können herangezogen werden. Im übrigen ist bevorzugt daran gedacht, ranghohe Elemente der Bildmenge dieses Subcodes für Sonderanwendungen zu reservieren, beispielsweise im Tunnelbau und für Lärmschutzwände, für die besonders hohe Anforderungen bestehen.

Die in den Bauwerken tatsächlich eingesetzten Verbindungselemente sind in der Regel Zulassungsbedingungen unterworfen, um überhaupt verwendet werden zu dürfen. Im Geltungsbereich der Europäischen Union sei hierfür beispielsweise an die europäisch technische Zulassung (ETA) hingewiesen. Letztere erlauben im gewissen Umfang, die Mindest-Rand- und -Achsabstände, welche beispielsweise in den o. g. Statiknormen klar definiert sind, beispielsweise bedingt durch die Spitzengestaltung der Holzbauschraube zu reduzieren/minimieren. Ein weiterer Subcode des Codiersystems bildet daher bevorzugt die Rand- und Achsabstände ab. Da die Rand- und Achsabstände letztlich bestimmen, wie schlank die Konstruktion selbst sein darf, wird auf diese Weise verhindert, nur aufgrund der Verbindungselemente eine Überdimensionierung des Holzbauteils in Kauf nehmen zu müssen. Unter Berücksichtigung von Faserrichtung und belastetem/unbelastetem Rand kann die Eigenschaft durch z.B. einen 6-komponentigen Vektor dargestellt werden, gegebenenfalls auch durch einen 12-komponentigen Vektor unter Berücksichtigung der Holzarten Vollholz und Brettschichtholz.

Soweit der Geltungsbereich der Europäischen Union betroffen ist, bezieht sich das Codiersystem des erfindungsgemäßen Sicherheitssystems bevorzugt auf die europäischtechnische Zulassung nach EN 14592, und soll bevorzugt auf nach Prüfnorm EN ISN 8970 geprüfte stiftförmige Verbindungsmittel herangezogen werden; in anderen Geltungsbereichen kann an einen Bezug zu vergleichbaren Sicherheitsnormen gedacht werden.

Gegebenenfalls ist zu berücksichtigen, dass für die Holzbauteile selbst ebenfalls Anforderungen bestehen, die im Geltungsbereich der Europäischen Union in weiteren zahlreichen Normen bestimmt sind. Eine Rückwirkung auf das Codiersystem des erfindungsgemäßen Sicherheitssystems kann sich über die Rohdichte des Holzes des Holzbauteils ergeben. Besonders bevorzugt ist vorgesehen, dass das Codiersystem unabhängig von der Holzdichte arbeitet. Das bedeutet, dass bezüglich der entsprechenden Eigenschaften die entsprechenden Subcodes auf eine vorgegebene Rohdichte bezogen sind, bevorzugt 350 kg/m³. Bei Verwendung von Holzbauteilen mit unterschiedlicher Rohdichte müßte vor Anwendung des Codiersystems auf diese vorbestimmte Rohdichte umgerechnet werden. Eine Bemessung könnte hier nach EN 1995-1 (EC 5), SIA 265:2012, DIN 1052:2008 erfolgen.

Typische Kennzeichnungen von beispielsweise Holzbauschrauben betreffend ihre geometrischen Abmessungen, etwa Nenndurchmesser, und/oder Gewindelänge können gemeinsam mit dem Identifikationsmerkmal an demselben Ort abrufbar vorgesehen werden.

Hinsichtlich der Bildmenge der einzelnen Subcodes sieht die Erfindung alphanumerische Zeichen, insbesondere eine Teilmenge der nicht negativen ganzen Zahlen, bevorzugt beschränkt auf einstellige Zahlen vor.

In einem konkreten Ausführungsbeispiel für Holzbauschrauben könnte das Identifikationsmerkmal demnach eine siebenziffrige Zahlenfolge sein. Der Vergleich erfolgt dann anhand der einzelnen Ziffern der Zahlenfolge.

In einem weiteren Aspekt offenbart die Erfindung auch eine Holzbauschraube, die durch ein gemäß dem Codiersystem des Sicherheitssystems entzifferbares Identifikationsmerkmal gekennzeichnet ist, sowie ein unter Einsatz solcher Verbindungselemente, also unter Verwendung eines solchen Sicherheitssystems errichtetes Bauwerk, und stellt diese unter Schutz.

Desweiteren wird das Codiersystem des erfindungsgemäßen Sicherheitssystems hiermit auch als eigenständig (ohne Zugehörigkeit des Verbindungselementes) offenbart und als eigenständig schutzfähig angesehen.

In weiteren Aspekten beinhaltet die Erfindung auch in unabhängiger Weise ein Verfahren zur Errichtung eines Bauwerkes unter Verwendung wenigstens eines unter Einsatz von Verbindungselementen anzubringenden Holzbauteils, wobei für Eigenschaften der Verbindungselemente betreffend deren mechanische Belastungsfähigkeit und deren Widerstandsfähigkeit gegenüber Umwelteinflüssen, sowie ggf. für Eigenschaften ihres gemeinsamen Einsatzes sich aus dem Bauwerk ergebende Mindestanforderungen festgelegt werden, und wobei das Verfahren verwendet: ein mehrere Subcodes aufweisendes Codiersystem, wobei je einer der Subcodes vorbestimmt abgestufte Bereiche für je eine dieser Eigenschaften in einer vorgegebenen Rangordnung abbildet und eine Zusammenstellung aus je einem Element der Bildmenge eines jeden Subcodes ein über das Codiersystem entzifferbares Identifikationsmerkmal für ein jeweiliges Verbindungselement bildet, wobei die Rangordnung derart ist, dass ein im Vergleich mit einem ausreichenden, bei Entzifferung die Erfüllung aller festgelegten Mindestanforderungen anzeigenden Identifikationsmerkmal bezüglich jedes einzelnen seiner zusammengestellten Elemente ranggleiches oder ranghöheres Identifikationsmerkmal ebenfalls die Erfüllung der Mindestanorderungen impliziert, und wobei bei dem Verfahren über ein zugehöriges ausreichendes Identifikationsmerkmal verfügendes Verbindungselement verwendet wird, dessen zugehöriges Identifikationsmerkmal insbesondere an wenigstens einem Ort ganzheitlich abrufbar ist und insbesondere das rangniedrigste ausreichende Identifikationsmerkmal ist , wobei die Errichtung unter Verwendung eines Sicherheitssystems nach einem der Ansprüche 1 bis 10 erfolgt.

Des weiteren wird ein Verfahren zur Erstellung eines solchen Codiersystems hier ebenfalls als eigenständig schutzwürdig offenbart.

Insbesondere wird offenbart ein Verfahren zur Bestimmung einer für die Errichtung eines Bauwerkes geeigneten Holzbauschraube, welche der Anbringung eines Holzbauteils dient und an das sich aus dem Bauwerk ergebende Mindestanforderungen hinsichtlich Eigenschaften der mechanischen Belastungsfähigkeit und der Widerstandsfähigkeit gegenüber Umwelteinflüssen, sowie ggf. für deren gemeinsamen Einsatz gestellt sind, bei dem zu einem für diese Mindestanforderungen gemäß dem Codiersystem nach Schutzanspruch 1 bestimmten rangniedrigsten Identifikationsmerkmal durch elementenweisen Vergleich mit gemäß demselben Codiersystem identi-fizierten Verbindungselementen ein oder mehrere Verbindungselemente ermittelt werden, welche wenigstens ranggleich oder ranghöher sind.

In einer bevorzugten Variante dieses Verfahrens erfolgt dieser Vergleich automatisch auf Eingabe des gemäß dem Codiersystem umgewandelten Anforderungsprofils, auf welche die als ranggleich oder ranghöher identifizierte Verbindungselemente beispielsweise in Form einer Liste ausgegeben werden.

In einer weiteren bevorzugten Verfahrensvariante kann vorgesehen werden, dass nur solche Verbindungselemente ausgegeben werden, deren Identifikationsmerkmal sich im Rang um nicht mehr als ein vorgegebenes Maß unterscheiden. Es können jedoch auch noch weitere Kriterien bei der Zusammenstellung der ausgegebenen Verbindungselemente berücksichtigt werden, beispielsweise die mengenmäßige oder zeitliche Verfügbarkeit der Verbindungselemente oder auch deren Preis.

In einem weiteren Aspekt wird als eigenständig schutzfähig offenbart ein Verfahren zur Herstellung einer Holzbauschraube mit vorgegebenen Mindestanforderungen hinsichtlich deren mechanischer Belastungsfähigkeit und Widerstandsfähigkeit gegenüber Umwelteinflüssen, mit dem optionalen Verfahrensschritt der Überprüfung dieser Mindestanforderungen durch Belastungstests, sowie mit dem Schritt der Kennzeichnung des Verbindungselements durch Zuordnung eines Identifikationsmerkmals, welches aus je einem Element der Bildmenge eines jeden Subcodes des Codiersystems des in Anspruch 1 beschriebenen Sicherheitssystems zusammengesetzt ist, insbesondere des Codiersystems eines Sicherheitssystems mit den weiteren Merkmalen der Ansprüche 2 bis 10.

Weitere Merkmale, Einzelheiten und Vorteile der Erfindung ergeben sich aus der nachfolgenden Beschreibung mit Bezug auf die beiliegenden Figuren, von denen
Fig. 1 ein Beispiel für ein bevorzugtes, bei dem erfindungsgemäßen Sicherheitssystem einsetzbares Verbindungselement zeigt,
Fig. 2 schematisch einen Subcode des Codiersystems des erfindungsgemäßen Sicherheitssystems zeigt, und
Fig. 3 schematisch die Wirkungsweise des erfindungsgemäßen Sicherheitssystems erläutert.

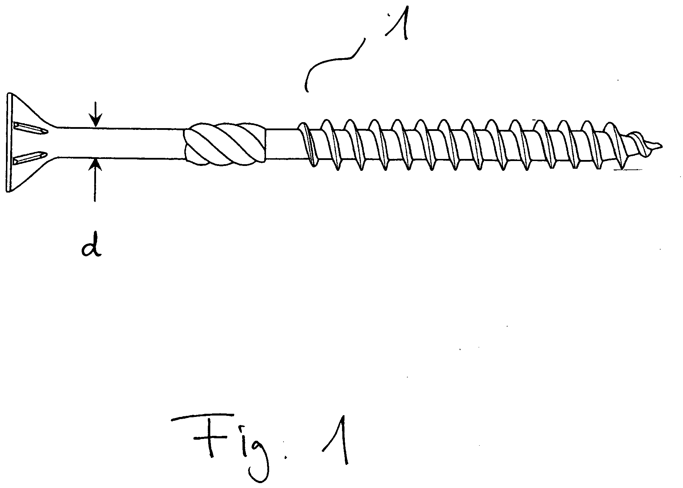

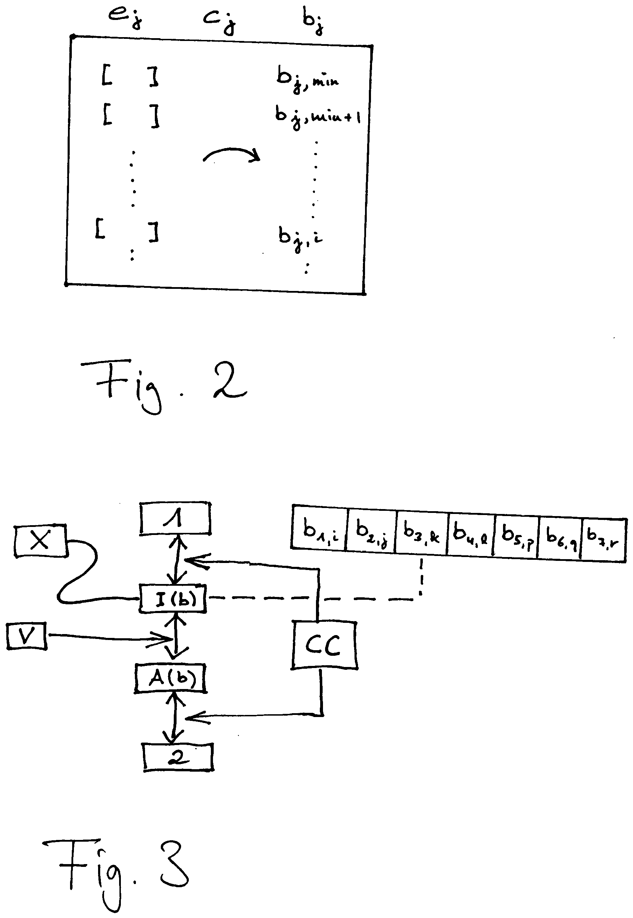

Die in Fig. 1 dargestellte Holzbauschraube 1 weist einen Nenndurchmesser d von hier beispielsweise 6 mm auf. Sie soll bei der Errichtung eines Bauwerkes 2 (siehe Fig. 3) zum Einsatz kommen, um ein Bauteil des Bauwerkes an einem Holzbauteil des Bauwerkes anzubringen, üblicherweise bei einer Verbindung, in der mehrere identischer solcher Holzbauschrauben 1 zum Einsatz kommen sollen.

Durch Messungen und Testversuche wird für diese Holzbauschraube 1 nunmehr bestimmt:
- das charakteristische Fließmoment, mit Ergebnis 8,5 Nm
- die charakteristische Zugtragfähigkeit, mit Ergebnis 10,7 kN
- den charakteristischen Ausziehparameter, mit Ergebnis 11,9 N/mm²
- den charakteristischen Kopfdurchziehparameter, mit Ergebnis 12 N/mm²
- das charakteristische Bruchdrehmoment, mit Ergebnis 9,5 Nm

Desweiteren ist die hergestellte Holzbauschraube 1 verzinkt und wird daher als teilweise vor Witterung geschützt oder für direkte Bewitterung geeignet angesehen.

Diese Messungen werden üblicherweise im Rahmen der zu erlangenden europäisch technischen Zulassung durchgeführt. Diese so erhaltenen Ergebnisse stellen somit jeweils einen einparametrigen Wert dar.

Desweiteren werden, in der Regel unter Messungen unter Beanspruchung rechtwinklig zur Schaftrichtung bei einer Testholzdicke von größer als dem zehnfachen Nenndurchmesser die erforderlichen Rand- und Achsabstände parallel und rechtwinklig zur Faserrichtung und unter Berücksichtigung des Abstandes vom beanspruchten bzw. unbeanspruchten Randes als erforderliche Mindestwerte in Form eines sechsparametrigen Parametervektors ausgedrückt und beispielsweise in Form einer Tabelle dargestellt.

Für jede dieser insgesamt sieben Eigenschaften wird nun eine auf einer Klassifizierung beruhende Abbildungsvorschrift geschaffen, wie sie in Fig. 2 schematisch dargestellt ist. Die Abbildungsvorschrift cⱼ (Subcode des Codiersystems) beruht auf der in Tabelle 1 angegebenen Klassifizierung in abgestufte Bereiche eⱼ und weist diesen eine Codeziffer aus der Bildmenge bⱼ des Subcodes cⱼ zu, welche ranggeordnet den Rang der abgestuften Klassifizierung beibehält.

**Tabelle 1**

| Charakteristisches Fließmoment M_{y,k} in [Nm]; ab | b₁ |
|---|---|
| 3,5 | 1 |
| 5,5 | 2 |
| 7,5 | 3 |
| 9,5 | 4 |
| 11,7 | 5 |
| ... | ... |

Der Subcode c₁ enthält somit zunächst fünf Abstufungen, ist jedoch nach oben offen und könnte weitergehende Abstufungen enthalten. Dies wird durch die letzte Zeile in Tabelle 1 zum Ausdruck gebracht.

Für die Holzbauschraube des Ausführungsbeispiels ergibt sich somit die Codeziffer b₁=3 nach Tabelle 1.

In analoger Weise werden gemäß den Tabellen 2 bis 5 die Codeziffern b₂=3, b₃=5, b₄=3 und b₅=3 ermittelt.

**Tabelle 2**

| Charakteristisches Zugtragfähigkeit fₜₑₙₛ in [kN]; ab | b₂ |
|---|---|
| 6,2 | 1 |
| 7,3 | 2 |
| 10,7 | 3 |
| 11 | 4 |
| ... | ... |

**Tabelle 3**

| Charakteristischer Ausziehparameter f_{ax,k} in [N/mm²]; ab | b₃ |
|---|---|
| 11,4 | 1 |
| 11,5 | 2 |
| 11,7 | 3 |
| 11,8 | 4 |
| 11,9 | 5 |
| ... | ... |

**Tabelle 4**

| Charakteristischer Kopfdurchziehparameter f_{head,k} in [N/mm²]; ab | b₄ |
|---|---|
| 0 | 0 |
| 8 | 1 |
| 10 | 2 |
| 12 | 3 |
| 13 | 4 |
| ... | ... |

**Tabelle 5**

| Charakteristischer Bruchdrehmoment f_{tor,k} in [Nm]; ab | b₅ |
|---|---|
| 5,7 | 1 |
| 8 | 2 |
| 9,5 | 3 |
| 11 | 4 |
| 12 | 5 |
| ... | ... |

Das erste Bildelement b_{4,1} lautet nicht 1, sondern 0, da diesem die Bedeutung eines Zylinderkopfes zuzumessen ist, die dadurch hervorgehoben wird.

Der Subcode c₆ betrifft die Widerstandsfähigkeit gegenüber Umwelteinflüssen. Gemäß Tabelle 6 betreffen die ersten drei Abstufungen den Nutzungsklassen der genannten Statiknormen. Die vierte Abstufung betrifft darüber hinausgehende Extremanforderungen für Sonderanwendungen wie etwa beim Tunnelbau.

**Tabelle 6**

| Nutzungsklasse | b₆ |
|---|---|
| vor Witterung geschützt | 1 |
| teilweise vor Witterung geschützt oder direkt bewittert | 2 |
| feucht oder unter Wasser | 3 |
| Sonderanwendungen (Tunnelbau ,...) | 4 |
| ... | ... |

Die verzinkte Holzbauschraube des Ausführungsbeispiels erhält durch den Subcode c₆ demnach die Codeziffer b₆=2. In ähnlicher Weise wird mit Subcode c₇ die sechsparametrige Eigenschaft der Rand- und Achsabstände abgebildet. Das Bildelement b_{7,0} entspricht dabei den Mindestanforderungen gemäß der eingangs genannten Norm, welche für alle Holzbauschrauben unabhängig von der Ausgestaltung der Schraubspitze gilt. Ist letztere aber selbstschneidend ausgebildet, ergeben sich spezifischere geringere Mindestabstände, beispielsweise um bestimmte Prozentsätze herabgesetzte Werte. Die Prozentsätze können sich dabei durchaus innerhalb der einzelnen der sechs Parameter unterscheiden.

Obwohl dies in der Abbildung von Fig. 1 nicht dargestellt ist, soll die Holzbauschraube 1 mit einer in das Gewinde integrierten Schneidkerbe ausgestattet sein, wodurch die Verringerung der genormten Mindestabstände zulässig ist, und die siebte Codeziffer lautet für dieses Ausführungsbeispiel b₇=1.

Demnach wird in diesem Ausführungsbeispiel der Holzbauschraube 1 das aus den Bildelementen b₁ bis b₇ zusammengesetzte Identifikationsmerkmal I(b)=3|3|5|3|3|2|1 zugeordnet. Dieses Identifikationsmerkmal könnte beispielsweise in den Schaft der Holzbauschraube eingeprägt sein. In diesem Ausführungsbeispiel ist es jedenfalls auf der Verpackung der Holzbauschraube 1 angebracht, d.h. das Identifikationsmerkmal I ist am Ort X der verpackten Holzbauschrauben 1 durch einen Betrachter optisch ohne Hilfsmittel zu erkennen.

Die bislang geschilderte Bestimmung des der Holzbauschraube 1 zuzuordnenden Identifikationsmerkmals I ist in der oberen Hälfte der Fig. 3 nochmals gezeigt. Daraus geht hervor, dass der Holzbauschraube 1 das Identifikationsmerkmal I zugeordnet ist, dessen Bestimmung über das Codiersystem CC erfolgt, und das ganzheitlich am Ort X abrufbar ist. Die beispielhafte und bevorzugt gewählte Darstellung des Identifikationsmerkmals ist ebenfalls in Fig. 3 rechts oben abgebildet.

Nunmehr wird der untere Bereich des Funktionsschemas aus Fig. 3 erläutert.

Es soll unter Verwendung von Holzbauteilen ein Bauwerk errichtet werden. Für eine ausgewählte Verbindung, bei der ein Bauteil des Bauwerks an einem Holzbauteil des Bauwerks durch beispielsweise Holzbauschrauben anzubringen ist, entscheidet sich der Planer dafür, dass Holzbauschrauben mit einem Schraubendurchmesser von 6 mm verwendet werden sollen. Auf dieser Basis ermittelt er Mindestanforderungen zu den genannten Eigenschaften und erhält Mindestanforderungen an das Fließmoment von 8; an die charakteristische Zugtragfähigkeit von 9,8; an den charakteristischen Ausziehparameter von 11,4; an den charakteristischen Kopfdurchziehparameter von 12; und an das charakteristische Bruchdrehmoment von 8, jeweils in den oben genannten Einheiten. Die Verbindungsstelle ist vor Witterung geschützt. Zudem sieht der Planer eine schlanke Konstruktion vor, die bezüglich der Rand- und Achsabstände durch eine lediglich die entsprechende Norm erfüllende Holzbauschraube nicht mehr realisierbar ist. Ausgehend von diesen Anforderungen zieht der Planer das Codiersystem CC heran, genauer gesagt dessen für Schraubendurchmesser von 6 mm gültige Subcodes. Damit ermittelt der Planer ein codiertes Anforderungsprofil, dass sich nunmehr ebenfalls siebenstelliger Code passend zu der oben erläuterten Darstellung des Identifikationsmerkmals ausdrücken lässt. Er erhält dabei das Ergebnis A(b)=3 |2|1|3|2|2|1. Die Ausschreibung des Bauwerks enthält für die betreffende Verbindung neben dem Schraubendurchmesser hinsichtlich der genannten Eigenschaften ggf. nur noch die codierten Anforderungen A(b).

Bei der Errichtung des Bauwerkes kann der Verarbeiter nunmehr auf einfache Weise feststellen, ob er die Holzbauschraube 1 dieses Ausführungsbeispiels für diese Verbindungsstelle einsetzen darf. Durch elementenweisen Vergleich V (Codeziffer pro Codeziffer) ist festzustellen, dass das Identifikationsmerkmal I(b) an jeder einzelnen Codestelle einen wenigstens gleich hohen Wert aufweist wie das codierte Anforderungsprofil A(b). Der Verarbeiter darf die Holzbauschraube 1 daher bedenkenlos einsetzen, und das Bauwerk wird bezüglich dieser Verbindung sicher errichtet.

In einer Modifizierung dieses Ausführungsbeispiels stehen dem Verarbeiter aufgrund der zahlreichen Verbindungsstellen mit den genannten Anforderungen bei Lieferverzögerung keine ausreichende Menge der Holzbauschraube 1 zur Verfügung. Ohne das erfindungsgemäße Sicherheitssystem besteht dann die Gefahr, dass der Verarbeiter Ersatz-Holzbauschrauben 1' verwendet, die beispielsweise ein charakteristisches Fließmoment von nur 4 Nm und eine charakteristische Zugtragfähigkeit von nur 6,5 kN besitzen. Der Verarbeiter hat aber weder die Kenntnisse, noch die Zeit, um diesen Unterschied überhaupt feststellen zu können. Alternativ ist denkbar, dass der Verarbeiter irrtümlich davon ausgeht, die Produkteigenschaften der Holzbauschraube 1' wären in jedem Belange ausreichend. Durch Verwendung der Holzbauschraube 1' werden letztlich nicht ausreichend leistungsfähige Verbindungselemente verbaut. Löst sich dann ggf. erst Jahre nach der Errichtung eine Verbindung und entsteht dadurch ein schwerwiegender Schaden, möglicherweise sogar ein schwerwiegender Personenschaden, kann oftmals nur noch festgestellt werden, dass in der Gesamtheit von Planung und Errichtung des Bauwerkes nicht ausreichend sicher gearbeitet wurde.

Durch das erfindungsgemäße Sicherheitssystem ergibt sich dagegen die folgende Wirkung:
Durch einfachen Vergleich des Identifikationsmerkmals I' der Holzbauschraube 1', welches hier unter Hinzuziehung der weiteren Eigenschaften beispielsweise 1|1|2|3|3|2|0 lautet, mit dem Identifikationscode I der Holzbauschraube 1 erkennt der Verarbeiter, dass er jedenfalls partiell mit einer qualitativ schlechteren Holzbauschraube arbeiten würde. Eine Gegenprüfung mit dem codierten Anforderungsprofil A(b) zeigt dem Verarbeiter, dass er aufgrund der ersten beiden Codestellen die Mindestanforderungen nicht erfüllt. Er wird sich daher ohne großen Zeitverlust Ersatz-Holzbauschrauben 1" beschaffen, deren zugehöriges Identifikationsmerkmal I"(b) durch Einzelvergleich feststellbar bezüglich jeder Codeziffer ranggleich oder ranghöher ist als das codierte Anforderungsprofil A(b). Der Vergleichsschritt I mit I' könnte dabei auch weggelassen werden und sofort mit A(b) verglichen werden.

Dadurch erhöht sich die Sicherheit bei der Errichtung des Bauwerkes, und es dürfte zu einem späteren Schaden gar nicht mehr kommen.

Das erfindungsgemäße Sicherheitssystem leistet darüber hinaus eine verbesserte Sicherheit aufgrund der verbesserten Kontrollmöglichkeit und auch bezüglich einer etwaigen späteren Aufklärung eines Schadenfalls. So ist zum einen die Bauwerkabnahme erleichtert, wenn für alle Verbindungsstellen die codierten Anforderungsprofile A einerseits und die verwendeten Verbindungselemente mit ihrem zugehörigen Identifikationsmerkmal I vorliegen. Auch ließe sich im Falle eines späteren Schadens ermitteln, ob in der Planungsphase ein nicht ausreichendes Anforderungsprofil ausgeschrieben wurde, oder ob bei der Errichtung des Bauwerkes trotz Einsatzes des erfindungsgemäßen Sicherheitssystems ein Fehler aufgetreten ist.

Darüber hinaus liefert das erfindungsgemäße Sicherheitssystem die Möglichkeit der tatsächlich produktneutralen Ausschreibung, und eine Zeitersparnis bei der Auswahl der ausreichend leistungsfähigen Verbindungselemente. Desweiteren wird die Möglichkeit zur gezielten Produktentwicklung passend auf spezielle codierte Anforderungsprofile geschaffen.

## Patentansprüche

1. Sicherheitssystem für die Einrichtung eines Bauwerkes (2) unter Verwendung wenigstens eines unter Einsatz von Holzbauschrauben anzubringenden Holzbauteils, wobei für Eigenschaften der Holzbauschrauben betreffend deren mechanische Belastungsfähigkeit und deren Widerstandsfähigkeit gegenüber Umwelteinflüssen sowie insbesondere für Eigenschaften ihres gemeinsamen Einsatzes sich aus dem Bauwerk ergebende Mindestanforderungen (A) festgelegt sind, und wobei das Sicherheitssystem aufweist:
ein mehrere Subcodes (cⱼ) aufweisendes Codiersystem (CC), wobei je einer der Subcodes vorbestimmt abgestufte Bereiche (eⱼ) für je eine dieser Eigenschaften abbildet und eine Zusammenstellung aus je einem Element (b_{j,k}) der Bildmenge (bⱼ) eines jeden Subcodes ein über das Codiersystem entzifferbares Identifikationsmerkmal (I) für eine jeweilige Holzbauschraube bildet, und wobei
das Sicherheitssystem weiter aufweist:
eine für die Anbringung des Holzbauteils einsetzbare und somit über ein zugehöriges ausreichendes Identifikationsmerkmal identifizierbare Holzbauschraube (1), wobei das zugehörige Identifikationsmerkmal an wenigstens einem Ort (X) ganzheitlich abrufbar ist,
**dadurch gekennzeichnet, dass** das Codiersystem für jede die mechanische Belastungsfähigkeit betreffende Eigenschaft der Gruppe: charakteristisches Fließmoment, charakteristischer Ausziehparameter, charakteristischer Kopfdurchziehparameter, charakteristische Zugtragfähigkeit und charakteristische Torsionsfestigkeit einen Subcode aufweist, und die Bildmenge von allen Subcodes dieser Gruppe aus alphanumerischen Zeichen besteht, wobei die Abbildung eines jeden Subcodes dieser Gruppe gemäß einer vorgegebenen Rangordnung gegeben ist und wobei die Rangordnung derart ist, dass ein im Vergleich (V) mit einem ausreichenden, bei Entzifferung die Erfüllung aller festgelegten Mindestanforderungen anzeigenden Identifikationsmerkmal (I≥A) bezüglich jedes einzelnen (bⱼ) seiner zusammengestellten Elemente (b) ranggleiches oder ranghöheres Identifikationsmerkmal ebenfalls die Erfüllung der Mindestanforderungen impliziert, und wobei das ganzheitlich abrufbare Identifikationsmerkmal insbesondere das rangniedrigste ausreichende Identifikationsmerkmal ist.

2. Sicherheitssystem nach Anspruch 1, bei dem der Ort die Holzbauschraube selbst ist.

3. Sicherheitssystem nach Anspruch 1 oder 2, bei dem der Ort eine Verpackung der Holzbauschraube ist.

4. Sicherheitssystem nach einem der vorhergehenden Ansprüche, bei dem wenigstens ein Teil der Mindestanforderungen in Abhängigkeit des Nenndurchmessers der Holzbauschraube festgelegt sind.

5. Sicherheitssystem nach einem der vorhergehenden Ansprüche, bei dem die Holzbauschraube eine Schraube von ab 6 mm, insbesondere ab 8 mm Nenndurchmesser ist.

6. Sicherheitssystem nach einem der vorhergehenden Ansprüche, bei dem eine der die Widerstandsfähigkeit gegen Umwelteinflüsse betreffenden Eigenschaften der Korrosionsschutz ist und das Codiersystem einen entsprechenden Subcode aufweist.

7. Sicherheitssystem nach einem der vorhergehenden Ansprüche, bei dem eine der den gemeinsamen Einsatz der Holzbauschrauben betreffenden Eigenschaften die Rand- und Achsabstände sind und bei dem das Codiersystem einen entsprechenden Sub-code aufweist.

8. Sicherheitssystem nach einem der vorhergehenden Ansprüche, bei dem wenigstens ein Teil der Subcodes auf eine vorgegebene Rohdichte des Holzes des Holzbauteils bezogen sind, und die entsprechenden Mindestanforderungen vor Bestimmung des rangniedrigsten ausreichenden Identifikationsmerkmals bei einer davon abweichenden Rohdichte des anzubringenden Holzbauteils auf die vorgegebene Rohdichte umzurechnen sind.

9. Sicherheitssystem nach einem der vorhergehenden Ansprüche, bei dem der Holzbauschraube eine Kennzeichnung zugeordnet ist, die zum einen das Identifikationsmerkmal enthält und zusätzlich geometrische Abmessungen der Holzbauschraube, beispielsweise den Nenndurchmesser und/oder die Gewindelänge einer Holzbauschraube.

10. Sicherheitssystem nach einem der vorhergehenden Ansprüche, bei dem die Bildmenge eines Subcodes, bevorzugt eines jeden Subcodes eine Teilmenge der nicht negativen ganzen Zahlen, bevorzugt beschränkt auf einstellige Zahlen ist.

11. Verfahren zur Errichtung eines Bauwerkes unter Verwendung wenigstens eines unter Einsatz von Holzbauschrauben anzubringenden Holzbauteils, wobei für Eigenschaften der Holzbauschrauben betreffend deren mechanische Belastungsfähigkeit und deren Widerstandsfähigkeit gegenüber Umwelteinflüssen, sowie ggf. für Eigenschaften ihres gemeinsamen Einsatzes sich aus dem Bauwerk ergebende Mindestanforderungen festgelegt werden, unter Verwendung eines Sicherheitssystems nach einem der Ansprüche 1 bis 10.

12. Holzbauschraube, **gekennzeichnet durch** ein gemäß dem Codiersystem des Sicherheitssystems nach einem der Ansprüche 1 bis 10 entzifferbares Identifikationsmerkmal.

13. Bauwerk mit wenigstens einem unter Einsatz von Holzbauschrauben angebrachten Holzbauteil, errichtet unter Verwendung eines Sicherheitssystems nach einem der Ansprüche 1 bis 10.

## Claims

1. A safety system for the construction of a structure (2) using at least one wooden component which is to be attached using wood screws, minimum requirements (A) arising from the structure being set for properties of the wood screws as regards their mechanical loading capacity and their resistance to environmental influences and in particular for properties of their general use, and the safety system comprising:
a coding system (CC) having a number of sub-codes (cⱼ), each one of the sub-codes representing predetermined graduated regions (eⱼ) for each one of these properties and a combination of a respective element (b_{j,k}) of the image set (bⱼ) of each sub-code forming an identification feature (I) that can be deciphered by the coding system for a respective wood screw, and
the safety system further comprising:
a wood screw (1) that can be used for the attachment of the wooden component and so that can be identified by an associated sufficient identification feature, the associated identification feature being completely retrieveable at at least one location (X),
**characterised in that** the coding system for each property of the group relating to the mechanical loading capacity: characteristic yield moment, characteristic pull-out parameter, characteristic head pull-through parameter, characteristic tensile capacity and characteristic torsional strength has a sub-code, and the image set of all sub-codes of this group is made up of alphanumerical characters, the representation of each sub-code of this group being given according to a pre-specified rank order, and the rank order being such that an identification feature of the same rank or of a higher rank in comparison (V) with a sufficient identification feature (I≥A) indicating the fulfilment of all set minimum requirements when deciphering with regard to each of the individual (bⱼ) combined elements (b) implies fulfilment of the minimum requirements, and the completely retrievable identification feature being in particular the lowest rank sufficient identification feature.

2. The safety system according to Claim 1, wherein the location is the wood screw itself.

3. The safety system according to Claim 1 or 2, wherein the location is packaging of the wood screw.

4. The safety system according to any of the preceding claims, wherein at least
some of the minimum requirements are set dependently upon the nominal diameter of the wood screw.

5. The safety system according to any of the preceding claims, wherein the wood screw is a screw with a nominal diameter of at least 6 mm, in particular at least 8 mm.

6. The safety system according to any of the preceding claims, wherein one of
the properties relating to resistance against environmental influences is corrosion protection and the coding system has a corresponding sub-code.

7. The safety system according to any of the preceding claims, wherein one of
the properties relating to the general use of the wood screws are the edge and axis distances, and wherein the coding system has a corresponding sub-code.

8. The safety system according to any of the preceding claims, wherein at least
some of the sub-codes relate to a pre-specified bulk density of the wood of the wooden component, and the corresponding minimum requirements are to be converted to the pre-specified bulk density before determining the lowest rank sufficient identification feature with a raw density of the wooden component to be attached that deviates from this.

9. The safety system according to any of the preceding claims, wherein there is assigned to the wood screw an identifier which contains on the one hand the identification feature and additionally geometric dimensions of the wood screw, for example the nominal diameter and/or the thread length of a wood screw.

10. The safety system according to any of the preceding claims, wherein the image set of a sub-code, preferably of each sub-code, is a partial amount of the non-negative whole numbers, preferably restricted to single-digit numbers.

11. A method for the construction of a structure using at least one wooden component to be attached using wood screws, minimum requirements arising from the structure being set for properties of the wood screws as regards their mechanical loading capacity and their resistance to environmental influences, and optionally for properties of their general use, using a safety system according to any of Claims 1 to 10.

12. A wood screw, **characterised by** an identification feature that can be deciphered by the coding system of the safety system according to any of Claims 1 to 10.

13. A structure having at least one wooden component that is attached using wood screws, constructed using a safety system according to any of Claims 1 to 10.

## Revendications

1. Système de sécurité pour la réalisation d'une construction (2) au moyen d'au moins un élément de construction en bois susceptible d'être fixé par des vis pour construction bois, des exigences minimales (A) tributaires de ladite construction étant déterminées relativement à des propriétés des vis pour construction bois concernant leur résistance mécanique et leur résistance vis-à-vis des facteurs environnementaux, ainsi notamment qu'à des propriétés concernant leur emploi en commun, le système de sécurité présentant :
un système de codage (CC) présentant plusieurs sous-codes (cⱼ), chacun des sous-codes représentant des intervalles pré-échelonnés (eⱼ) relatifs à chacune de ces propriétés et l'association d'un élément (b_{j,k}) respectif de l'ensemble d'arrivée (bⱼ) de chacun des sous-codes permettant de former une caractéristique d'identification (I), relative à une vis pour construction bois donnée, déchiffrable par le biais du système de codage,
le système de sécurité présentant en outre :
une vis pour construction bois (1) destinée à la fixation de l'élément de construction en bois et identifiable, à cet effet, au moyen d'une caractéristique d'identification afférente suffisante, ladite caractéristique d'identification afférente étant consultable dans son entier en au moins un emplacement (X),
**caractérisé en ce que** le système de codage présente un sous-code propre à chacune des propriétés concernant la résistance mécanique, à savoir : moment de fluage caractéristique, paramètre d'arrachement caractéristique, paramètre de résistance à l'arrachement sous la tête caractéristique, capacité de portance de charge caractéristique et résistance à la torsion caractéristique, et l'ensemble d'arrivée de tous les sous-codes de ce groupe se compose de signes alphanumériques, la représentation de chacun des sous-codes de ce groupe étant donnée suivant un ordre prédéfini qui est tel qu'une caractéristique d'identification d'ordre égal ou supérieur, en comparaison (V) d'une caractéristique d'identification (1≥A) suffisante, concernant chaque élément individuel (bⱼ) constituant ses éléments (b) associés, et satisfaisant au déchiffrage à toutes les exigences minimales déterminées, implique également que les exigences minimales sont satisfaites, ladite caractéristique d'identification consultable dans son entier consistant notamment en la caractéristique d'identification de rang le plus bas suffisante.

2. Système de sécurité selon la revendication 1, dans lequel l'emplacement consiste en la vis pour construction bois elle-même.

3. Système de sécurité selon la revendication 1 ou 2, dans lequel l'emplacement consiste en l'emballage des vis pour construction bois.

4. Système de sécurité selon l'une des revendications précédentes, dans lequel au moins une partie des exigences minimales sont déterminées en fonction du diamètre nominal de la vis pour construction bois.

5. Système de sécurité selon l'une des revendications précédentes, dans lequel la vis pour construction bois consiste en une vis présentant un diamètre nominal d'au moins 6 mm, notamment d'au moins 8 mm.

6. Système de sécurité selon l'une des revendications précédentes, dans lequel une des propriétés concernant la résistance vis-à-vis des facteurs environnementaux est la résistance à la corrosion, et le système de codage présente un sous-code correspondant.

7. Système de sécurité selon l'une des revendications précédentes, dans lequel une des propriétés concernant l'utilisation en commun des vis pour construction bois est la distance axiale et par rapport au bord, le système de codage présentant un sous-code correspondant.

8. Système de sécurité selon l'une des revendications précédentes, dans lequel au moins une partie des sous-codes se rapportent à une épaisseur brute prédéfinie du bois de l'élément de construction en bois et, si l'épaisseur brute de l'élément de construction destiné à être fixé s'écarte de ladite épaisseur brute prédéfinie, les exigences minimales correspondantes doivent être recalculées sur la base de l'épaisseur brute prédéfinie avant la détermination des caractéristiques d'identification d'ordre le plus bas suffisantes.

9. Système de sécurité selon l'une des revendications précédentes, dans lequel un identifiant est attribué à la vis pour construction bois et contient d'une part la caractéristique d'identification et d'autre part des cotes géométriques de la vis pour construction bois, par exemple le diamètre nominal et/ou la longueur du filet de la vis pour construction bois.

10. Système de sécurité selon l'une des revendications précédentes, dans lequel l'ensemble d'arrivée d'un sous-code, de préférence de chaque sous-code, consiste en un sous-ensemble des nombres entiers non négatifs, en étant de préférence limité à des nombres à un chiffre.

11. Procédé de réalisation d'une construction au moyen d'au moins un élément de construction en bois susceptible d'être fixé par des vis pour construction bois, dans lequel des exigences minimales tributaires de ladite construction sont déterminées relativement à des propriétés des vis pour construction bois concernant leur résistance mécanique et leur résistance vis-à-vis des facteurs environnementaux, ainsi éventuellement qu'à des propriétés concernant leur emploi en commun, au moyen d'un système de sécurité selon l'une des revendications 1 à 10.

12. Vis pour construction bois, **caractérisée par** une caractéristique d'identification déchiffrable suivant le système de codage du système de sécurité selon l'une des revendications 1 à 10.

13. Construction présentant au moins un élément de construction fixé au moyen de vis pour construction bois, réalisée au moyen d'un système de sécurité selon l'une des revendications 1 à 10.
